(19) **Europäisches Patentamt**
**European Patent Office**
**Office européen des brevets**

(11) **EP 4 099 431 A1**

(12) **EUROPEAN PATENT APPLICATION**
published in accordance with Art. 153(4) EPC

(43) Date of publication:
**07.12.2022 Bulletin 2022/49**

(21) Application number: **20918761.6**

(22) Date of filing: **14.02.2020**

(51) International Patent Classification (IPC):
*H01M 4/133* (2010.01)    *H01M 4/587* (2010.01)
*H01M 4/62* (2006.01)    *H01M 10/0565* (2010.01)

(52) Cooperative Patent Classification (CPC):
**H01M 4/133; H01M 4/587; H01M 4/62;**
**H01M 10/0565;** Y02E 60/10

(86) International application number:
**PCT/JP2020/005849**

(87) International publication number:
**WO 2021/161521 (19.08.2021 Gazette 2021/33)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Showa Denko Materials Co., Ltd.**
**Tokyo 100-6606 (JP)**

(72) Inventors:
• **SERA Yusuke**
**Tokyo 100-6606 (JP)**

• **ORITA Akihiro**
**Tokyo 100-6606 (JP)**
• **HOSHI Kento**
**Tokyo 104-0044 (JP)**
• **HONBO Hidetoshi**
**Tokyo 100-6606 (JP)**

(74) Representative: **Hoffmann Eitle**
**Patent- und Rechtsanwälte PartmbB**
**Arabellastraße 30**
**81925 München (DE)**

(54) **NEGATIVE ELECTRODE FOR SECONDARY CELL, SECONDARY CELL, AND NEGATIVE ELECTRODE MATERIAL FOR SECONDARY CELL**

(57)    Disclosed is a negative electrode for a secondary battery, the negative electrode including: a negative electrode current collector; and a negative electrode mixture layer provided on the negative electrode current collector. The negative electrode mixture layer contains a graphite powder and a polymer electrolyte. A powder compact spring-back ratio of the graphite powder is 15 to 35%. Furthermore, disclosed is a secondary battery including: a positive electrode; the above-described negative electrode; and an electrolyte layer provided between the positive electrode and the negative electrode. Further, disclosed is a negative electrode material for a secondary battery, the negative electrode material containing a graphite powder and a polymer electrolyte.

## Description

### Technical Field

The present invention relates to a negative electrode for a secondary battery, a secondary battery, and a negative electrode material for a secondary battery.

### Background Art

In recent years, with the widespread use of portable electronic devices, electric vehicles, and the like, a high-performance secondary battery has been required. Particularly, a lithium secondary battery has a high energy density, and thus has been used as a power source for portable electronic devices, electric vehicles, and the like. High safety has been required in the lithium secondary battery, and as means thereof, development of an all-solid-state battery has been proceeding.

In the all-solid-state battery, a layer (electrolyte layer) of a solid electrolyte such as a polymer electrolyte or an inorganic solid electrolyte is provided on an electrode mixture layer instead of an electrolytic solution. In such an all-solid-state battery, a solid electrolyte is added also into the electrode mixture layer in some cases. For example, Patent Literature 1 discloses an all-solid-state battery in which a negative electrode layer (negative electrode mixture layer) has a graphite negative electrode active material and a solid electrolyte of a garnet-type crystal structure that is an organic electrolyte. Furthermore, Patent Literature 2 discloses an electrode (negative electrode) for an all-solid-state battery, the electrode having electrode active material particles (artificial graphite) and a polymer electrolyte as a solid electrolyte.

### Citation List

### Patent Literature

Patent Literature 1: JP 2018-206487
Patent Literature 2: JP 2019-525428

### Summary of Invention

### Technical Problem

It is required for the above-described electrode (particularly, negative electrode) to show high performance when a secondary battery is produced. However, there is a tendency that a secondary battery produced using such an electrode is not sufficient, for example, in terms of initial characteristics in which the initial discharge capacity (initial capacity) is required to be close to the charge capacity as much as possible. Such a tendency is remarkable in the case of using a polymer electrolyte.

Therefore, a main object of the present invention is to provide a negative electrode for a secondary battery capable of enhancing initial characteristics of a secondary battery.

### Solution to Problem

The present inventors have conducted intensive studies, and as a result, have found that by containing a polymer electrolyte and a graphite powder having a specific hardness in a negative electrode (mixture layer), initial characteristics of a secondary battery can be enhanced, thereby completing the present invention.

An aspect of the present invention relates to a negative electrode for a secondary battery. This negative electrode for a secondary battery includes a negative electrode current collector and a negative electrode mixture layer provided on the negative electrode current collector. The negative electrode mixture layer contains a graphite powder and a polymer electrolyte. A powder compact spring-back ratio of the graphite powder is 15 to 35% and may be 20 to 28%. According to such a negative electrode for a secondary battery, initial characteristics of a secondary battery can be enhanced. The present inventors consider the reasons why such an effect is exhibited as follows. As the numerical value of the powder compact spring-back ratio is smaller, the shape of the powder particle hardly returns to the original shape after the powder particle is deformed, and there are many voids in the powder particles. Therefore, when the numerical value of the powder compact spring-back ratio is too small, the graphite powder that cannot be in contact with the polymer electrolyte is likely to exist, and as a result, initial characteristics are considered to be degraded. Furthermore, when the numerical value of the powder compact spring-back ratio is too large, it is not possible to cope with expansion and contraction associated with the charging/discharging, cracks of powder particles are easy to occur, and as a result, initial characteristics are considered to be degraded. The negative electrode for a secondary battery may be used in an all-solid-state battery including an electrolyte layer containing a polymer electrolyte.

Another aspect of the present invention relates to a secondary battery. This secondary battery includes the above-described negative electrode, and more specifically, includes a positive electrode, the above-described negative electrode, and an electrolyte layer provided between the positive electrode and the negative electrode.

Still another aspect of the present invention relates to a negative electrode material for a secondary battery. This negative electrode material for a secondary battery contains a graphite powder and a polymer electrolyte, and a powder compact spring-back ratio of the graphite powder is 15 to 35%.

**Advantageous Effects of Invention**

According to the present invention, there is provided a negative electrode for a secondary battery capable of enhancing initial characteristics of a secondary battery. Furthermore, according to the present invention, there is provided a secondary battery including such a negative electrode.

**Brief Description of Drawings**

FIG. 1 is a perspective view illustrating a secondary battery according to a first embodiment.
FIG. 2 is an exploded perspective view illustrating an embodiment of an electrode group in the secondary battery illustrated in FIG. 1.
FIG. 3(a) is a schematic cross-sectional view illustrating a negative electrode member for a secondary battery according to an embodiment, and FIG. 3(b) is a schematic cross-sectional view illustrating a negative electrode member for a secondary battery according to another embodiment.
FIG. 4 is an exploded perspective view illustrating an electrode group of a secondary battery according to a second embodiment.
FIG. 5(a) is a schematic cross-sectional view illustrating a battery member for a secondary battery according to an embodiment in the secondary battery illustrated in FIG. 4, and FIG. 5(b) is a schematic cross-sectional view illustrating a battery member for a secondary battery according to another embodiment in the secondary battery illustrated in FIG. 4.

**Description of Embodiments**

Hereinafter, embodiments of the present invention will be described with reference to the drawings as appropriate. However, the present invention is not limited to the following embodiments. In the following embodiment, constituent elements thereof (including steps and the like) are not necessarily indispensable unless otherwise stated. The sizes of constituent elements in respective drawings are only illustrative, and relative size relationships between constituent elements are not limited to those illustrated in respective drawings.

In the present specification, a numerical value and a range thereof are not intended to limit the present invention. In the present specification, a numerical range that has been indicated by use of "to" indicates the range that includes the numerical values which are described before and after "to", as the minimum value and the maximum value, respectively. In the numerical ranges that are described stepwise in the present specification, the upper limit value or the lower limit value of the numerical range of a certain stage may be replaced with the upper limit value or the lower limit value of the numerical range of another stage. In the numerical ranges that are described in the present specification, the upper limit value or the lower limit value of the numerical range may be replaced with the value shown in Examples.

In the present specification, hereinafter, the following abbreviated expressions are used in some cases.

[FSI]⁻: $N(SO_2F)_2{}^-$, bis(fluorosulfonyl)imide anion
[TFSI]⁻: $N(SO_2CF_3)_2{}^-$, bis(trifluoromethane sulfonyl)imide anion
[BOB]⁻: $B(O_2C_2O_2)_2{}^-$, bis oxalate borate anion
[f3C]⁻: $C(SO_2F)_3{}^-$, tris(fluorosulfonyl)carbanion

[First embodiment]

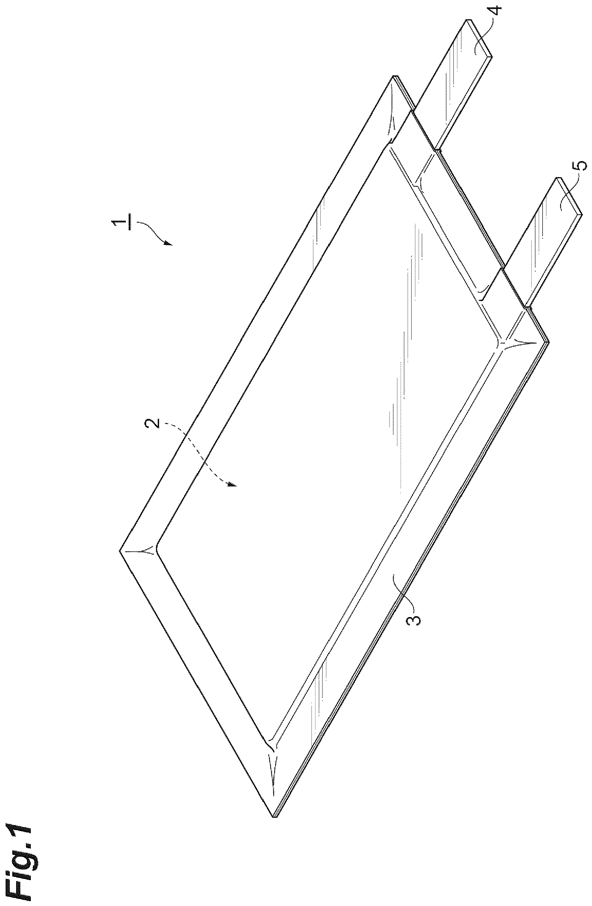

FIG. 1 is a perspective view illustrating a secondary battery according to a first embodiment. As illustrated in FIG. 1, a secondary battery 1 includes an electrode group 2 configured by a positive electrode, a negative electrode, and an electrolyte layer and a bag-shaped battery outer casing body 3 accommodating the electrode group 2. A positive electrode current collector tab 4 and a negative electrode current collector tab 5 are provided in the positive electrode and the negative electrode, respectively. The positive electrode current collector tab 4 and the negative electrode current collector tab 5 protrude from the inside of the battery outer casing body 3 to the outside so that each of the positive electrode and the negative electrode can be electrically connected to the outside of the secondary battery 1.

The battery outer casing body 3 may be formed, for example, of a laminate film. The laminate film may be, for example, a laminate film in which a resin film such as a polyethylene terephthalate (PET) film, a metallic foil such as aluminum, copper, or stainless steel, and a sealant layer such as polypropylene are laminated in this order.

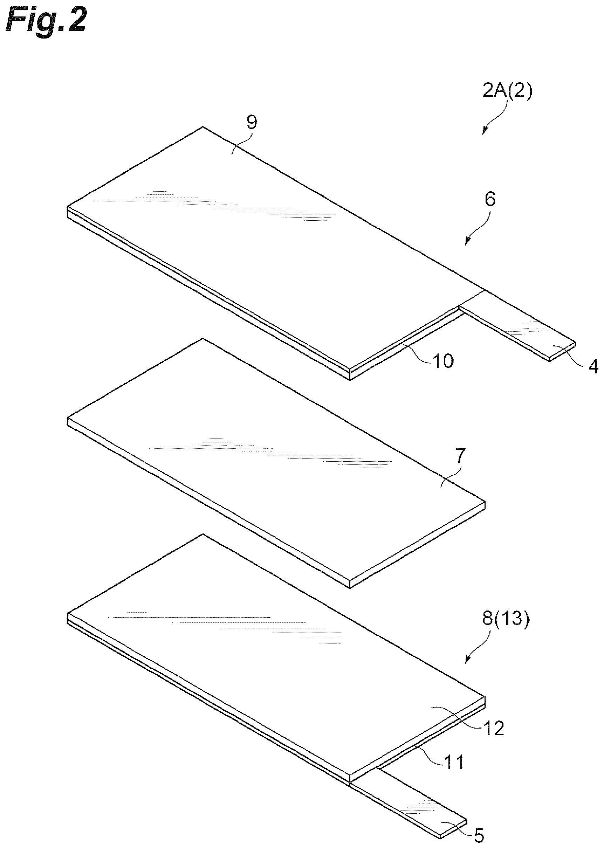

FIG. 2 is an exploded perspective view illustrating an embodiment of the electrode group 2 in the secondary battery 1 illustrated in FIG. 1. As illustrated in FIG. 2, an electrode group 2A according to the present embodiment includes a positive electrode 6, an electrolyte layer 7, and a negative electrode 8 in this order. The positive electrode 6 includes a positive electrode current collector 9 and a positive electrode mixture layer 10 provided on the positive electrode current collector 9. The positive electrode current collector tab 4 is provided in the positive electrode current collector 9. The negative electrode 8 includes a negative electrode current collector 11 and a negative electrode mixture layer 12 provided on the negative electrode current collector 11. The negative electrode current collector tab 5 is provided in the negative electrode current collector 11.

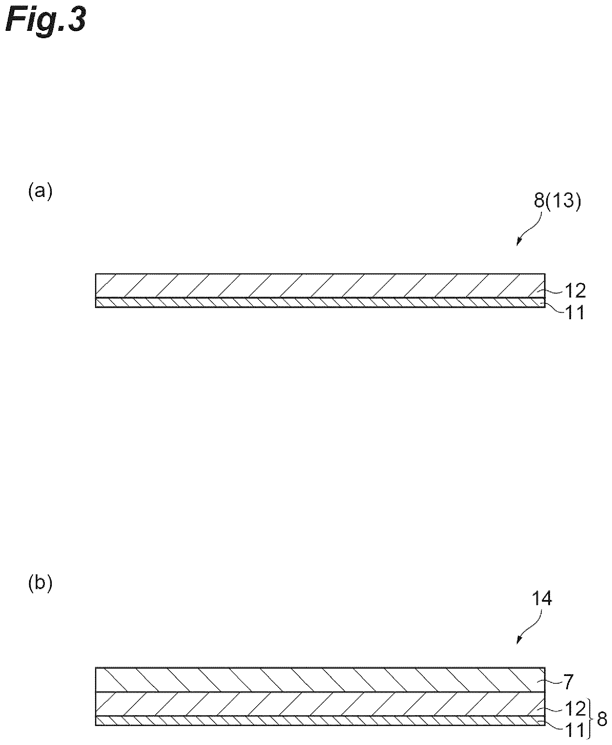

In an embodiment, it is conceivable that a negative electrode member 13 including the negative electrode current collector 11 and the negative electrode mixture layer 12 provided on the negative electrode current collector 11 is included in the electrode group 2A. FIG. 3(a) is a schematic cross-sectional view illustrating a negative electrode member for a secondary battery according to an embodiment. As illustrated in FIG. 3(a), the negative electrode member 13 includes the negative electrode current collector 11 and the negative electrode mixture layer 12 provided on the negative electrode current collector 11. The negative electrode 8 is configured by the negative electrode member 13 according to the embodiment. Hereinafter, the "negative electrode member" is simply called the "negative electrode" in some cases.

The negative electrode current collector 11 may be a metal such as aluminum, copper, nickel, or stainless steel, an alloy thereof, and the like. The negative electrode current collector 11 is preferably aluminum or an alloy thereof in order to have lightness in weight and a high weight energy density. The negative electrode current collector 11 is preferably copper from the viewpoint of ease of processing to a thin film and cost. The negative electrode current collector 11 may be formed of any material in addition to the above-described materials as long as it does not cause a change such as dissolution or oxidation during use of the battery, and shapes, manufacturing methods, and the like thereof are also not limited.

The thickness of the negative electrode current collector 11 may be 10 $\mu$m or more and 100 $\mu$m or less, and is preferably 10 $\mu$m or more and 50 $\mu$m or less from the viewpoint of decreasing the volume of the entire negative electrode, and more preferably 10 $\mu$m or more and 20 $\mu$m or less from the viewpoint of winding the negative electrode at a small curvature when the battery is formed.

The negative electrode mixture layer 12 contains a graphite powder as a negative electrode active material and a polymer electrolyte as a solid electrolyte. The negative electrode mixture layer 12 can be formed, for example, using a negative electrode material for a secondary battery, the negative electrode material containing a graphite powder and a polymer electrolyte.

The graphite powder has a spring-back ratio (powder compact spring-back ratio) when a powder compact is formed using the graphite powder of 15 to 35%. Note that, the powder compact spring-back ratio is an index indicating the hardness of the powder compact. As the numerical value is larger, the powder compact is hard, and as the numerical value is smaller, the shape of the powder particle hardly returns to the original shape after the powder particle is deformed, and there are many voids in the powder particles. In the present specification, the powder compact spring-back ratio means a value calculated by the method described in Examples. The graphite powder is not particularly limited as long as it satisfies the condition that the powder compact spring-back ratio is 15 to 35%, and natural graphite (such as flake graphite), artificial graphite, and the like can be used. The graphite powder is preferably artificial graphite. The graphite powder may be, for example, an aggregate of particulate graphites.

The powder compact spring-back ratio of the graphite powder is 15 to 35% and may be 20 to 28%. The powder compact spring-back ratio of the graphite powder may be 15% or more, 18% or more, 20% or more, or 22% or less, and may be 35% or less, 32% or less, 30% or less, 28% or less, or 27% or less. When the powder compact spring-back ratio of the graphite powder is 15% or more, the graphite powder that cannot be in contact with the polymer electrolyte is difficult to exist, and as a result, initial characteristics tend to be improved. When the powder compact spring-back ratio of the graphite powder is 35% or less, it is possible to cope with expansion and contraction associated with the charging/discharging, cracks of powder particles are difficult to occur, and as a result, initial characteristics tend to be improved.

The content of the graphite powder may be 60% by mass or more, 65% by mass or more, or 70% by mass or more, and may be 99% by mass or less, 95% by mass or less, or 90% by mass or less, on the basis of the total amount of the negative electrode mixture layer (the negative electrode material for a secondary battery).

The polymer electrolyte has a polymer and has ion conductivity, and can be used without particular limitation as long as it contains a polymer material that is used for a solid electrolyte of an all-solid-state battery. By combining the polymer electrolyte with the above-described graphite powder, lithium ion conduction in the negative electrode mixture layer can be performed, and as a result, initial characteristics of the secondary battery can be enhanced.

Examples of the polymer electrolyte include mixtures (complexes) of polymers and electrolyte salts. Examples of the polymer include polyether-based polymers such as polyethylene oxide (PEO) and polypropylene oxide (PPO), polyamine-based polymers such as polyethylene imine (PEI), polysulfide-based polymers such as polyalkylene sulfide (PAS), and an ion conductive polymer. The polymer electrolyte is preferably a mixture (complex) of a polyether-based polymer and an electrolyte salt.

The ion conductive polymer may be, for example, a polymer in which a base polymer is doped with a dopant. The base polymer usually tends not to show ion conductivity, but it is speculated that the base polymer is doped with a dopant to oxidize or reduce the polymer, so that a pair of a positive charge and a negative charge is formed in the polymer structure to form an ion conduction path.

The base polymer is not particularly limited as long as it is a polymer that can be oxidized or reduced by a dopant. More specifically, the base polymer may be polyphenylene sulfide (PPS), poly(p-phenylene oxide) (PPO), polyether ether ketone (PEEK), polyphthalamide (PPA), polythiophene, polyaniline, polyacetylene, polythiazyl, polydiacetylene, polypyrrole, polyparaphenylene, polynaphthylene, polyanthracene, or the like. The base polymer may be a thermoplastic polymer, and is preferably polyphenylene sulfide.

The dopant may be an electron-accepting dopant (acceptor), and may be an electron-donating dopant (donor). That is, the dopant may be an oxidant, and may be a reductant.

Examples of the acceptor (oxidant) include halogens such as bromine, iodine, and chlorine, Lewis acids such as $BF_3$, $PF_5$, $AsF_5$, and $SbF_5$, protonic acids such as $HNO_3$, $H_2SO_4$, $HClO_4$, HF, HCl, $FSO_3H$, and $CF_3SO_3H$, transition metal halides such as $FeCl_3$, $MoCl_5$, $WCl_5$, $SnCl_4$, $MoF_5$, $RuF_5$, $TaBr_4$, $TaBr_5$, and $SnI_4$, organic compounds such as 2,3-dichloro-5,6-dicyano-p-benzoquinone (DDQ), tetrachloro-1,4-benzoquinone (chloranil), tetracyanoquinodim ethane (TCNQ), and tetracyanoethylene (TCNE), and oxygen. These acceptors may be used alone or may be used as a mixture of two or more kinds thereof. The doping of the base polymer with the acceptor may be performed by an electrochemical treatment.

Examples of the donor (reductant) include alkali metals such as Li, Na, K, Rb, and Cs, alkali earth metals such as Be, Mg, and Ca, ammonium salts such as a tetraethylammonium salt and a tetrabutylammonium salt, and hydrogen. These donors may be used alone or may be used as a mixture of two or more kinds thereof.

The mass ratio of the base polymer and the dopant (base polymer/dopant) is preferably 99/1 to 20/80, more preferably 95/5 to 30/70, and further preferably 90/10 to 50/50.

The ion conductive polymer can also be obtained by treating a base polymer with a dopant. Examples of the method of treating the base polymer with the dopant include a method of vaporizing (sublimating) the dopant and bringing the base polymer into contact with the vapor. At this time, the base polymer may be molded in a sheet shape. The condition of vaporizing (sublimating) the dopant can be arbitrarily set according to the property of the dopant.

Examples of the electrolyte salt include lithium salts such as $LiPF_6$, $LiBF_4$, Li[FSI], Li[TFSI], Li[f3C], Li[BOB], $LiClO_4$, $LiBF_3(CF_3)$, $LiBF_3(C_2F_5)$, $LiBF_3(C_3F_7)$, $LiBF_3(C_4F_9)$, $LiC(SO_2CF_3)_3$, $CF_3SO_2OLi$, $CF_3COOLi$, and RCOOLi (R is an alkyl group having 1 to 4 carbon atoms, a phenyl group, or a naphthyl group). The electrolyte salt is preferably an imide-based lithium salt such as Li[TFSI] or Li[FSI]. The amount of the polymer in the mixture of the polymer and the electrolyte salt may be 1 mol or more, 5 mol or more, or 10 mol or more, and may be 50 mol or less, 40 mol or less, or 30 mol or less, with respect to 1 mol of the electrolyte salt.

The content of the polymer electrolyte may be 1% by mass or more, 5% by mass or more, or 10% by mass or more, and may be 40% by mass or less, 30% by mass or less, or 20% by mass or less, on the basis of the total amount of the negative electrode mixture layer (the negative electrode material for a secondary battery).

The negative electrode mixture layer 12 (the negative electrode material for a secondary battery) may contain an electrically conductive agent, a binder, and the like in addition to the graphite powder and the polymer electrolyte.

The electrically conductive agent is not particularly limited, and may be a carbon material such as acetylene black, carbon black, or a carbon fiber. The electrically conductive agent may be a mixture of two or more kinds of these carbon materials.

The content of the electrically conductive agent may be 0.1% by mass or more, 0.3% by mass or more, or 0.5% by mass or more, and may be 5% by mass or less, 3% by mass or less, or 1% by mass or less, on the basis of the total amount of the negative electrode mixture layer (the negative electrode material for a secondary battery).

The binder is not particularly limited, and may be a polymer containing, as a monomer unit, tetrafluoroethylene, acrylic acid, maleic acid, ethyl methacrylate, or the like, rubber such as styrene-butadiene rubber, isoprene rubber, or acrylic rubber, or the like.

The content of the binder may be 0.1% by mass or more, 1% by mass or more, or 3% by mass or more, and may be 15% by mass or less, 10% by mass or less, or 8% by mass or less, on the basis of the total amount of the negative electrode mixture layer (the negative electrode material for a secondary battery).

The thickness of the negative electrode mixture layer 12 may be 10 $\mu$m or more, 15 $\mu$m or more, or 20 $\mu$m or more, from the viewpoint of further improving the electrical conductivity. The thickness of the negative electrode mixture layer 12 may be 60 $\mu$m or less, 55 $\mu$m or less, or 50 $\mu$m or less. By setting the thickness of the negative electrode mixture layer to 50 $\mu$m or less, a deviation of the charging/discharging attributable to a variation in charging level of the negative electrode active material in the vicinity of the surface of the negative electrode mixture layer 12 and in the vicinity of the surface of the negative electrode current collector 11 can be suppressed.

The electrolyte layer 7 can be used without particular limitation as long as it is a solid electrolyte that is used in an all-solid-state battery. The electrolyte layer 7 may contain a polymer material that is used for a solid electrolyte in an all-solid-state battery, and may be, for example, a layer containing the above-described polymer electrolyte. The polymer electrolyte in the electrolyte layer 7 may be the same as or different from the polymer electrolyte contained in the negative electrode mixture layer, but is preferably the same as the polymer electrolyte contained in the negative electrode mixture layer.

The thickness of the electrolyte layer 7 is preferably 5 $\mu$m or more and more preferably 10 $\mu$m or more, from the viewpoint of enhancing the strength to improve the safety. The thickness of the electrolyte layer 7 is preferably 200 $\mu$m or less, more preferably 150 $\mu$m or less, and further preferably 100 $\mu$m or less, from the viewpoint of further decreasing the internal resistance of the secondary battery and the viewpoint of further improving large-current characteristics.

The positive electrode current collector 9 may be formed of aluminum, stainless steel, titanium, or the like. Specifically, the positive electrode current collector 9 may be, for example, an aluminum perforated foil having holes with a hole diameter of 0.1 to 10 mm, an expanded metal, a foam metal plate, and the like. The positive electrode current collector 9 may be formed of any material in addition to the above-described materials as long as it does not cause a change such as dissolution or oxidation during use of the battery, and shapes, manufacturing methods, and the like thereof are also not limited.

The thickness of the positive electrode current collector 9 may be 10 $\mu$m or more and 100 $\mu$m or less, and is preferably 10 $\mu$m or more and 50 $\mu$m or less from the viewpoint of decreasing the volume of the entire positive electrode, and more preferably 10 $\mu$m or more and 20 $\mu$m or less from the viewpoint of winding the positive electrode at a small curvature when the battery is formed.

The positive electrode mixture layer 10 may contain, for example, a positive electrode active material and a polymer electrolyte as a solid electrolyte.

The positive electrode active material may be a lithium transition metal compound such as a lithium transition metal oxide or a lithium transition metal phosphate. The lithium transition metal oxide may be, for example, lithium manganese oxide, lithium nickel oxide, and lithium cobalt oxide. The lithium transition metal oxide may be a lithium transition metal oxide in which a part of a transition metal such as Mn, Ni, or Co contained in lithium manganese oxide, lithium nickel oxide, lithium cobalt oxide, or the like is substituted with one or two or more kinds of other transition metals or a metal element (representative element) such as Mg or Al. That is, the lithium transition metal oxide may be a compound represented by $LiM^1O_2$ or $LiM^1{}_2O_4$ ($M^1$ includes at least one transition metal). The lithium transition metal oxide may be specifically $Li(Co_{1/3}Ni_{1/3}Mn_{1/3})O_2$, $LiNi_{1/2}Mn_{1/2}O_2$, $LiNi_{1/2}Mn_{3/2}O_4$, or the like.

The lithium transition metal oxide is preferably a compound represented by Formula (7) below, from the viewpoint of further improving the energy density.

$$Li_aNi_bCo_cM^2{}_dO_{2+e} \qquad (7)$$

[In Formula (7), $M^2$ is at least one selected from the group consisting of Al, Mn, Mg, and Ca, and a, b, c, d, and e are numbers satisfying $0.2 \leq a \leq 1.2$, $0.5 \leq b \leq 0.9$, $0.1 \leq c \leq 0.4$, $0 \leq d \leq 0.2$, $-0.2 \leq e \leq 0.2$, and $b + c + d = 1$, respectively.]

The lithium transition metal phosphate may be $LiFePO_4$, $LiMnPO_4$, $LiNb_xM^3{}_{1-x}PO_4$ ($0.3 \leq x \leq 1$, $M^3$ is at least one element selected from the group consisting of Fe, Ni, Co, Ti, Cu, Zn, Mg, and Zr), or the like.

The positive electrode active material may be primary particles that are not agglomerated, and may be secondary particles that are agglomerated.

The particle size of the positive electrode active material is adjusted to be equal to or less than the thickness of the positive electrode mixture layer 10. In a case where there are coarse particles having a particle size equal to or more than the thickness of the positive electrode mixture layer 10 in the positive electrode active material, the coarse particles are previously removed by sieve classification, wind flow classification, or the like to sort out the positive electrode active material having a particle size equal to or less than the thickness of the positive electrode mixture layer 10.

The average particle size of the positive electrode active material is preferably 0.1 $\mu$m or more and more preferably 1 $\mu$m or more. The average particle size of the positive electrode active material is preferably 30 $\mu$m or less and more preferably 25 $\mu$m or less. The average particle size of the positive electrode active material is a particle size

($D_{50}$) when the proportion (volume fraction) with respect to the volume of the entire positive electrode active material reaches 50%. The average particle size ($D_{50}$) of the positive electrode active material can be obtained by measuring a suspension, which is obtained by suspending the positive electrode active material in water by a laser scattering method, using a laser scatter type particle size measurement device (for example, Microtrac).

The content of the positive electrode active material may be 60% by mass or more, 65% by mass or more, or 70% by mass or more, and may be 99% by mass or less, 95% by mass or less, or 90% by mass or less, on the basis of the total amount of the positive electrode mixture layer.

As the polymer electrolyte contained in the positive electrode mixture layer 10, the same polymer electrolyte as the polymer electrolyte contained in the negative electrode mixture layer 12 can be exemplified. The polymer electrolyte contained in the positive electrode mixture layer 10 may be the same as or different from the polymer electrolyte contained in the negative electrode mixture layer 12, but is preferably the same as the polymer electrolyte contained in the negative electrode mixture layer 12.

The content of the polymer electrolyte may be 1% by mass or more, 5% by mass or more, or 10% by mass or more, and may be 40% by mass or less, 30% by mass or less, or 20% by mass or less, on the basis of the total amount of the positive electrode mixture layer.

The positive electrode mixture layer 10 may contain an electrically conductive agent, a binder, and the like in addition to the positive electrode active material and the polymer electrolyte. As the electrically conductive agent and the binder, the same electrically conductive agent and binder as the electrically conductive agent and the binder which may be contained in the negative electrode mixture layer 12 can be exemplified. The content of the electrically conductive agent and the binder which may be contained in the positive electrode mixture layer 10 may be the same as the content of the electrically conductive agent and the binder in the negative electrode mixture layer 12.

The thickness of the positive electrode mixture layer 10 may be 10 $\mu$m or more, 15 $\mu$m or more, or 20 $\mu$m or more, from the viewpoint of further improving the electrical conductivity. The thickness of the positive electrode mixture layer 10 may be 100 $\mu$m or less, 80 $\mu$m or less, or 70 $\mu$m or less. By setting the thickness of the positive electrode mixture layer to 100 $\mu$m or less, a deviation of the charging/discharging attributable to a variation in charging level of the positive electrode active material in the vicinity of the surface of the positive electrode mixture layer 10 and in the vicinity of the surface of the positive electrode current collector 9 can be suppressed.

In another embodiment, it is also conceivable that a negative electrode member, which includes the negative electrode current collector 11, the negative electrode mixture layer 12, and the electrolyte layer 7 in this order, is included in the electrode group 2A. FIG. 3(b) is a schematic cross-sectional view illustrating a negative electrode member for a secondary battery according to another embodiment. As illustrated in FIG. 3(b), a negative electrode member 14 is a negative electrode member which includes the negative electrode current collector 11, the negative electrode mixture layer 12 provided on the negative electrode current collector 11, and the electrolyte layer 7 provided on the negative electrode mixture layer 12 in this order. The electrolyte layer 7, the negative electrode current collector 11, and the negative electrode mixture layer 12 are the same as the electrolyte layer 7, the negative electrode current collector 11, and the negative electrode mixture layer 12 in the negative electrode member 13 described above, respectively.

Subsequently, a method for manufacturing the above-described secondary battery 1 will be described. The method for manufacturing the secondary battery 1 includes a first step of forming the negative electrode mixture layer 12 on the negative electrode current collector 11 to produce the negative electrode 8, a second step of forming the positive electrode mixture layer 10 on the positive electrode current collector 9 to produce the positive electrode 6, and a third step of providing the electrolyte layer 7 between the positive electrode 6 and the negative electrode 8.

In the first step, the negative electrode 8 can be obtained, for example, by dispersing a material to be used for the negative electrode mixture layer 12 (the negative electrode material for a secondary battery) in a dispersion medium to obtain a negative electrode mixture slurry, applying this negative electrode mixture slurry to the negative electrode current collector 11, and then vaporizing the dispersion medium. The dispersion medium is preferably an organic solvent such as N-methyl-2-pyrrolidone (NMP) or acetonitrile.

In the second step, the positive electrode 6 can be obtained by the same method as in the negative electrode 8 described above. That is, the positive electrode 6 can be obtained by dispersing a material to be used for the positive electrode mixture layer 10 to obtain a positive electrode mixture slurry, applying the positive electrode mixture slurry to the positive electrode current collector 9, and then vaporizing the dispersion medium.

In an embodiment of the third step, the electrolyte layer 7 can be obtained, for example, by molding the polymer electrolyte into a sheet shape so as to have a predetermined thickness. In the third step, the positive electrode 6, the electrolyte layer 7, and the negative electrode 8 are laminated, for example, by lamination so that the secondary battery 1 can be obtained. At this time, lamination is performed such that the electrolyte layer 7 is positioned on the positive electrode mixture layer 10 side of the positive electrode 6 and the negative electrode mixture layer 12 side of the negative electrode 8, that is, the positive electrode current collector 9, the positive electrode mixture layer 10, the electrolyte layer 7, the negative electrode mixture layer 12, and the negative electrode current collector 11 are disposed in this order.

In another embodiment of the third step, the electrolyte layer 7 is formed by being laminated on the negative electrode mixture layer 12 of the negative electrode 8. This step is a step of producing the above-described negative electrode member 14. Then, the negative electrode 8 (the negative electrode member 14) provided with the electrolyte layer 7 and the positive electrode 6 are laminated with the electrolyte layer 7 interposed therebetween, so that the secondary battery 1 can be obtained.

[Second embodiment]

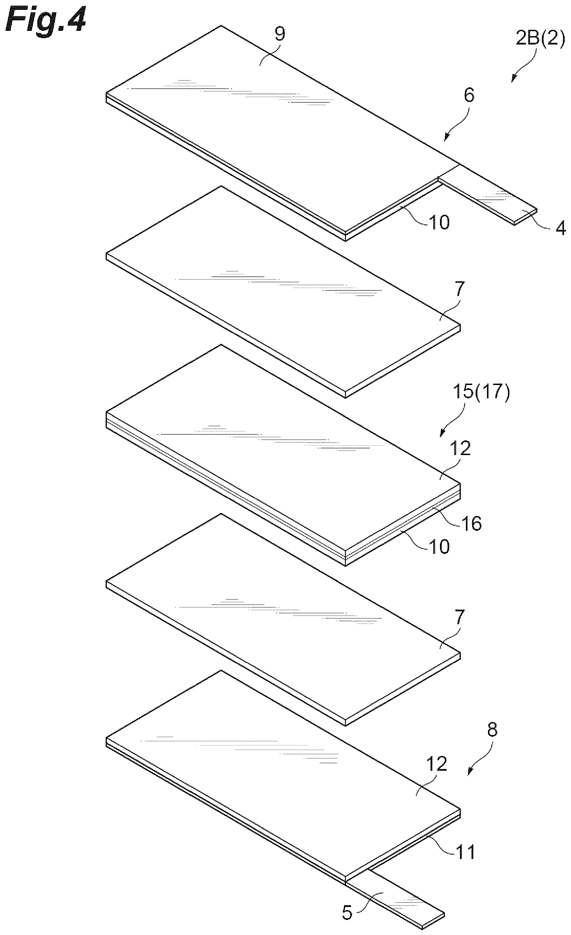

Next, a secondary battery according to a second embodiment will be described. FIG. 4 is an exploded perspective view illustrating an electrode group of a secondary battery according to a second embodiment. As illustrated in FIG. 4, the secondary battery in the second embodiment is different from the secondary battery in the first embodiment, in that an electrode group 2B includes a bipolar electrode 15. That is, the electrode group 2B includes the positive electrode 6, the (first) electrolyte layer 7, the bipolar electrode 15, the (second) electrolyte layer 7, and the negative electrode 8 in this order.

The bipolar electrode 15 includes a bipolar electrode current collector 16, the positive electrode mixture layer 10 provided on the surface (positive electrode surface) of the bipolar electrode current collector 16 on the negative electrode 8 side, and the negative electrode mixture layer 12 on the surface (negative electrode surface) of the bipolar electrode current collector 16 on the positive electrode 6 side. That is, since the bipolar electrode 15 has both of a function of the positive electrode and a function of the negative electrode, it is conceivable that another positive electrode, which includes the bipolar electrode current collector 16 and the positive electrode mixture layer 10 provided on the bipolar electrode current collector 16, and another negative electrode, which includes the bipolar electrode current collector 16 and the negative electrode mixture layer 12 provided on the bipolar electrode current collector 16, are included in the electrode group 2B in the second embodiment, in addition to the positive electrode 6 and the negative electrode 8.

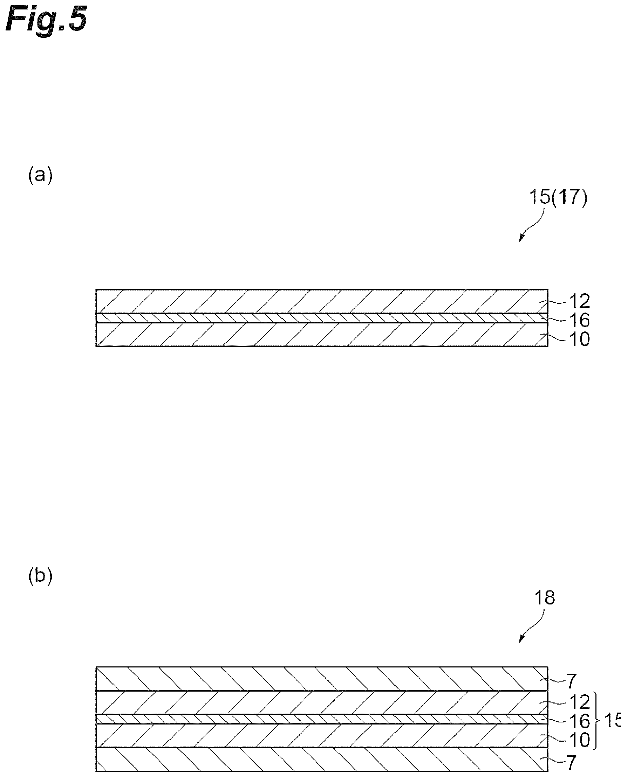

In an embodiment, it is conceivable that the bipolar electrode 15 is a battery member for a secondary battery, the battery member including the bipolar electrode current collector 16 and the negative electrode mixture layer 12 provided on the bipolar electrode current collector 16. FIG. 5(a) is a schematic cross-sectional view illustrating a battery member for a secondary battery according to an embodiment. As illustrated in FIG. 5(a), a battery member 17 is a battery member that includes the bipolar electrode current collector 16, the positive electrode mixture layer 10 provided on one surface of the bipolar electrode current collector 16, and the negative electrode mixture layer 12 provided on the side opposite to the bipolar electrode current collector 16 on the positive electrode mixture layer 10.

In the bipolar electrode current collector 16, the positive electrode surface may be preferably formed of a material excellent in oxidation resistance, and may be formed of aluminum, stainless steel, titanium, or the like. The negative electrode surface in the bipolar electrode current collector 16 using graphite or an alloy as a negative electrode active material may be formed of a material that does not form an alloy with lithium, and specifically, may be formed of stainless steel, nickel, iron, titanium, or the like. In the case of using different kinds of metals for the positive electrode surface and the negative electrode surface, the bipolar electrode current collector 16 may be a cladding material in which different kinds of metallic foils are laminated. However, in the case of using the negative electrode 8 operating at a potential that does not form an alloy with lithium, such as lithium titanium oxide, the above-described limitations are eliminated, and the negative electrode surface may be the same material as that of the positive electrode current collector 9. In this case, the bipolar electrode current collector 16 may be a single metallic foil. The bipolar electrode current collector 16 as the single metallic foil may be an aluminum perforated foil having holes with a hole diameter of 0.1 to 10 mm, an expanded metal, a foam metal plate, and the like. The bipolar electrode current collector 16 may be formed of any material in addition to the above-described materials as long as it does not cause a change such as dissolution or oxidation during use of the battery, and shapes, manufacturing methods, and the like thereof are also not limited.

The thickness of the bipolar electrode current collector 16 may be 10 $\mu$m or more and 100 $\mu$m or less, and is preferably 10 $\mu$m or more and 50 $\mu$m or less from the viewpoint of decreasing the volume of the entire bipolar electrode, and more preferably 10 $\mu$m or more and 20 $\mu$m or less from the viewpoint of winding the bipolar electrode at a small curvature when the battery is formed.

The negative electrode mixture layer 12 in the battery member 17 may be configured by the same material as that of the negative electrode mixture layer 12 in the negative electrode member 13 of the first embodiment described above.

In another embodiment, it is also conceivable that a battery member, which includes the (first) electrolyte layer 7, the bipolar electrode 15, and the (second) electrolyte layer 7 in this order, is included in the electrode group 2B. FIG. 5(b) is a schematic cross-sectional view illustrating a battery member for a secondary battery according to another embodiment. As illustrated in FIG. 5(b), a battery member 18 includes the bipolar electrode current collector 16, the positive electrode mixture layer 10 provided on one surface of the bipolar electrode current collector 16, the (second) electrolyte layer 7 provided on the side, which is opposite to the bipolar electrode current collector 16, on the positive electrode mixture layer 10, the negative electrode mixture layer 12 provided on the other surface of the bipolar electrode current collector 16, and the (first) electrolyte layer 7 provided on the side, which is opposite to the bipolar electrode current collector 16, on the negative electrode mixture layer 12.

The bipolar electrode current collector 16, the positive electrode mixture layer 10, and the negative electrode mixture layer 12 in the battery member 18 may be configured by the same materials as those of the bipolar electrode current collector 16, the positive electrode mixture layer 10, and the negative electrode mixture layer 12 in the battery member 17 described above.

The (first) electrolyte layer 7 and the (second) electrolyte layer 7 in the battery member 18 may be configured by the same material as that of the electrolyte layer 7 of the first embodiment described above. The (first) electrolyte layer 7 and the (second) electrolyte layer 7 may be the same as or different from each other, but are preferably the same as each other.

**Examples**

Hereinafter, the present invention will be described in more detail by means of Examples; however, the present invention is not limited to these Examples.

(Test Examples 1 to 6)

<Measurement of powder compact spring-back ratio of graphite powder>

Each of graphite powders A to F was prepared. In a cylindrical powder molding die (diameter: 15.0 mm), 3.000 ($\pm$ 0.005) g of a single (one type) graphite powder was filled. The die thus filled was uniaxially pressed using an autograph so that the density of the powder compact of the graphite powder reached 1.65 $g/cm^3$. After the density reached 1.65 $g/cm^3$, the pressure was reduced until the pressure reached 0 N, and this state (the state of 0 N) was maintained for 30 seconds. After 30 seconds, the pressure was applied until the pressure reached 2 N, and a density $\rho_{after}$ ($g/cm^3$) of the powder compact of the graphite powder after application of pressure was measured. The powder compact spring-back ratio of the graphite powder was calculated on the basis of Equation (A) below. The results are shown in Table 1.

$$\text{Powder compact spring-back ratio (\%)}$$
$$= [1.65 - \rho_{after}]/1.65 \times 100 \qquad \text{(A)}$$

Table 1

|  | Test Exam. 1 | Test Exam. 2 | Test Exam. 3 | Test Exam. 4 | Test Exam. 5 | Test Exam. 6 |
|---|---|---|---|---|---|---|
| Type of graphite powder | A | B | C | D | E | F |
| Powder compact spring-back ratio (%) | 11.5 | 18.5 | 22.0 | 24.6 | 26.9 | 30.1 |

(Comparative Example 1)

<Production of negative electrode>

The graphite powder A (Test Example 1), a polymer electrolyte (mixture of polyethylene oxide (PEO) and Li[FSI], molar ratio 20 : 1), carbon black (manufactured by Showa Denko K.K.) as an electrically conductive agent, and polyvinylidene fluoride (manufactured by KUREHA CORPORATION) as a binder were mixed at a mass ratio of 83 : 12.3 : 0.7 : 4, and the mixture was poured into acetonitrile serving as a dispersion medium and then stirred, thereby preparing a negative electrode mixture slurry. A copper foil having a thickness of 10 $\mu$m was prepared as a negative electrode current collector, the negative electrode mixture slurry was applied to the current collector, and then the obtained laminate was vacuum-dried at 80°C for 12 hours. Through a rolling step, an acetonitrile solution of a polymer electrolyte (mixture of polyethylene oxide (PEO) and Li[FSI], molar ratio 20 : 1) was further applied to a place to which the negative electrode mixture slurry had been applied. After application, the resultant product was dried at 80°C for 4 hours, and then a negative electrode of Comparative Example 1 including a negative electrode current collector and a negative electrode mixture layer with a thickness of 25 $\mu$m provided on the negative electrode current collector was obtained. The obtained negative electrode was punched into a diameter of 16 mm and then used in the production of a secondary battery.

<Production of secondary battery>

As a counter electrode, an electrode obtained by punching lithium metal into a diameter of 16 mm was prepared. As an electrolyte layer, an electrolyte layer obtained by punching a polymer electrolyte having a thickness of 50 μm (mixture of polyethylene oxide (PEO) and Li[FSI], molar ratio 20 : 1) into a diameter of 16 mm was prepared. The negative electrode, the electrolyte layer, and the counter electrode, which had been produced above, were stacked in this order and disposed in a CR2032-type coin cell container, and then the upper part of the battery case was swaged through an insulating gasket to be tightly sealed. In this way, a coin-type half-cell secondary battery of Comparative Example 1 was obtained.

<Evaluation of secondary battery>

Initial characteristics were evaluated using the secondary battery of Comparative Example 1. The initial characteristics were evaluated by performing charging/discharging measurement at 60°C and at 0.05 C and on the basis of the first charge/discharge capacity. Note that, "C" in 0.05 C means "current value [A]/battery theoretical capacity [Ah]", and for example, "1 C" is a current value for fully charging or fully discharging a battery for 1 hour. Furthermore, the charge/discharge efficiency is a ratio of the first discharge capacity to the first charge capacity. The results are shown in Table 2.

(Example 1)

A secondary battery of Example 1 was obtained in the same manner as in Comparative Example 1, except that, in the production of the negative electrode, the graphite powder A (Test Example 1) was changed to the graphite powder B (Test Example 2). Furthermore, the secondary battery of Example 1 was evaluated in the same manner as in Comparative Example 1. The results are shown in Table 2.

(Example 2)

A secondary battery of Example 2 was obtained in the same manner as in Comparative Example 1, except that, in the production of the negative electrode, the graphite powder A (Test Example 1) was changed to the graphite powder C (Test Example 3). Furthermore, the secondary battery of Example 2 was evaluated in the same manner as in Comparative Example 1. The results are shown in Table 2.

(Example 3)

A secondary battery of Example 3 was obtained in the same manner as in Comparative Example 1, except that, in the production of the negative electrode, the graphite powder A (Test Example 1) was changed to the graphite powder D (Test Example 4). Furthermore, the secondary battery of Example 3 was evaluated in the same manner as in Comparative Example 1. The results are shown in Table 2.

(Example 4)

A secondary battery of Example 4 was obtained in the same manner as in Comparative Example 1, except that, in the production of the negative electrode, the graphite powder A (Test Example 1) was changed to the graphite powder E (Test Example 5). Furthermore, the secondary battery of Example 4 was evaluated in the same manner as in Comparative Example 1. The results are shown in Table 2.

(Example 5)

A secondary battery of Example 5 was obtained in the same manner as in Comparative Example 1, except that, in the production of the negative electrode, the graphite powder A (Test Example 1) was changed to the graphite powder F (Test Example 6). Furthermore, the secondary battery of Example 4 was evaluated in the same manner as in Comparative Example 1. The results are shown in Table 2.

Table 2

| | Comp. Exam. 1 | Exam. 1 | Exam. 2 | Exam. 3 | Exam. 4 | Exam. 5 |
|---|---|---|---|---|---|---|
| Type of graphite powder | A | B | C | D | E | F |
| Powder compact spring-back ratio (%) | 11.5 | 18.5 | 22.0 | 24.6 | 26.9 | 30.1 |
| Discharge capacity (mAh/h) | 156 | 347 | 343 | 331 | 353 | 331 |
| Charge/discharge efficiency (%) | 56 | 70 | 75 | 75 | 74 | 70 |

As shown in Table 2, in the secondary batteries of Examples 1 to 5 in which the powder compact spring-back ratio of the graphite powder is 15 to 35%, as compared to the secondary battery of Comparative Example 1 not satisfying such a condition, the first discharge capacity was high, and the charge/discharge efficiency calculated from the first charge/discharge capacity was high. From these results, it was confirmed that the negative electrode for a secondary battery of the present invention can enhance initial characteristics of the secondary battery.

**Reference Signs List**

1: secondary battery, 6: positive electrode, 7: electrolyte layer, 8: negative electrode, 9: positive electrode current collector, 10: positive electrode mixture layer, 11: negative electrode current collector, 12: negative electrode mixture layer, 13, 14: negative electrode member, 17, 18: battery member.

**Claims**

1.  A negative electrode for a secondary battery, the negative electrode comprising:

    a negative electrode current collector; and
    a negative electrode mixture layer provided on the negative electrode current collector,
    wherein
    the negative electrode mixture layer contains a graphite powder and a polymer electrolyte, and
    a powder compact spring-back ratio of the graphite powder is 15 to 35%.

2.  The negative electrode for a secondary battery according to claim 1, wherein the powder compact spring-back ratio is 20 to 28%.

3.  A secondary battery comprising:

    a positive electrode;
    the negative electrode according to claim 1 or 2; and
    an electrolyte layer provided between the positive electrode and the negative electrode.

4.  A negative electrode material for a secondary battery, the negative electrode material comprising:

    a graphite powder; and
    a polymer electrolyte,
    wherein
    a powder compact spring-back ratio of the graphite powder is 15 to 35%.

EP 4 099 431 A1

*Fig.1*

*Fig.2*

# *Fig.3*

(a)

8(13)

12
11

(b)

14

7

12
11 } 8

*Fig.4*

# *Fig.5*

(a)

15(17)

— 12
— 16
— 10

(b)

18

— 7
— 12 ⎤
— 16 ⎬ 15
— 10 ⎦
— 7

**INTERNATIONAL SEARCH REPORT**

| International application No. |
| --- |
| PCT/JP2020/005849 |

A. CLASSIFICATION OF SUBJECT MATTER
Int. Cl. H01M4/133(2010.01)i, H01M4/587(2010.01)i, H01M4/62(2006.01)i,
H01M10/0565(2010.01)i
FI: H01M4/133, H01M4/587, H01M4/62 Z, H01M10/0565
According to International Patent Classification (IPC) or to both national classification and IPC

B. FIELDS SEARCHED

Minimum documentation searched (classification system followed by classification symbols)
Int. Cl. H01M4/133, H01M4/587, H01M4/62, H01M10/0565

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2019-175721 A (SANYO ELECTRIC CO., LTD.) 10 October 2019, paragraphs [0008]-[0010] | 1-4 |
| A | JP 2019-532469 A (IMERYS GRAPHITE & CARBON SWITZERLAND LTD.) 07 November 2019, paragraphs [0004], [0120], [0132] | 1-4 |
| A | JP 2019-508355 A (IMERYS GRAPHITE & CARBON SWITZERLAND LTD.) 28 March 2019, paragraphs [0001], [0012] | 1-4 |
| A | JP 2012-516826 A (TIMCAL SA) 26 July 2012, paragraphs [0011], [0023], [0057], [0058] | 1-4 |

☐ Further documents are listed in the continuation of Box C.    ☒ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 20.04.2020 | 19.05.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

| International application No. |
| --- |
| PCT/JP2020/005849 |

| Patent Documents referred to in the Report | Publication Date | Patent Family | Publication Date |
| --- | --- | --- | --- |
| JP 2019-175721 A | 10.10.2019 | US 2019/0305300 A1 paragraphs [0011]-[0013]<br>CN 110323417 A | |
| JP 2019-532469 A | 07.11.2019 | US 2019/0237755 A1 paragraphs [0004], [0185], [0206]<br>WO 2018/046767 A1<br>EP 3510656 A1<br>CN 109690837 A<br>KR 10-2019-0049812 A | |
| JP 2019-508355 A | 28.03.2019 | WO 2017/125592 A1 paragraphs [0001], [0012]<br>EP 3405431 A1<br>CA 3011539 A1<br>CN 108602679 A<br>KR 10-2018-0118602 A<br>BR 112018014709 A2 | |
| JP 2012-516826 A | 26.07.2012 | JP 2016-26137 A<br>US 2012/0077035 A1 paragraphs [0009], [0021], [0059], [0060]<br>US 2016/0156014 A1<br>US 2017/0256778 A1<br>WO 2010/089326 A1<br>EP 2393753 A1<br>CA 2751309 A1<br>KR 10-2011-0118153 A<br>CN 102300807 A<br>KR 10-2018-0021209 A | |

Form PCT/ISA/210 (patent family annex) (January 2015)

18

**REFERENCES CITED IN THE DESCRIPTION**

**Patent documents cited in the description**

- JP 2018206487 A
- JP 2019525428 A